# EUROPEAN PATENT APPLICATION

(11) **EP 4 270 315 A1**
(43) Date of publication of application: **01.11.2023**
(21) Application number: 21922695.8
(22) Date of filing: 31.12.2021
(51) Int. Cl.: G06T 7/33

(54) **METHOD AND DEVICE FOR PROCESSING THREE-DIMENSIONAL VIDEO, AND STORAGE MEDIUM**

(30) Priority: 28.01.2021 CN 202110118335
(71) Applicant: BEIJING BYTEDANCE NETWORK TECHNOLOGY CO., LTD., Beijing 100041 (CN)
(72) Inventor: LIU, Xin, Beijing 100190 (CN); JIAO, Shaohui, Beijing 100190 (CN); WANG, Yue, Beijing 100190 (CN)
(74) Representative: Dentons UK and Middle East LLP
(86) International application number: PCT/CN2021/143666
(87) International publication number: WO 2022/161107

(57) **Abstract**

Provided are a method and a device for processing a three-dimensional video and a storage medium. The method includes the steps described below. Depth video streams from perspectives of at least two cameras of the same scene are acquired (S110). According to preset registration information, the depth video streams from the perspectives of the at least two cameras are registered (S120). According to the registered depth video streams from the perspectives of the at least two cameras, three-dimensional reconstruction is performed to obtain a 3D video (S130).

## Description

The present application claims priority to Chinese Patent Application No. 202110118335.3 filed with the China National Intellectual Property Administration (CNIPA) on Jan. 28, 2021, the disclosure of which is incorporated herein by reference in its entirety.

### TECHNICAL FIELD

The present disclosure relates to the technical field of three-dimensional video processing, for example, a method and a device for processing a three-dimensional video and a storage medium.

### BACKGROUND

With the continuous maturity of augmented reality (AR) technology and virtual reality (VR) technology and their applications in Internet videos, a uniquely immersive experience is provided by using the AR technology and the VR technology, which makes a viewer feel freer and more immersed.

A three-dimensional (3D) video can be viewed by the viewer at any different observation positions or at any different perspectives. Having a completely different data structure from a conventional 2D video, the 3D video still faces a great technical challenge in its processing.

### SUMMARY

The present disclosure provides a method and a device for processing a three-dimensional video and a storage medium, to process a 3D video.

The present disclosure provides a method for processing a three-dimensional video. The method includes acquiring depth video streams from perspectives of at least two cameras of the same scene; registering, according to preset registration information, the depth video streams from the perspectives of the at least two cameras; and performing, according to the registered depth video streams from the perspectives of the at least two cameras, three-dimensional reconstruction to obtain a 3D video.

The present disclosure provides another method for processing a three-dimensional video. The method includes acquiring depth video streams from perspectives of at least two cameras of the same scene, where a depth video stream of the depth video streams includes a Red-Green-Blue (RGB) stream and a depth information stream; and for each depth video stream of a respective camera perspective from the perspectives of the at least two cameras, sending the RGB stream of each depth video stream to a cloud server through a respective one of RGB channels; evenly distributing the depth information stream to the RGB channels, and sending the depth information stream to the cloud server through the RGB channels.

Embodiments of the present disclosure also provide an apparatus for processing a three-dimensional video. The apparatus includes an acquisition module, a registration module, and a reconstruction module. The acquisition module is configured to acquire depth video streams from perspectives of at least two cameras of the same scene. The registration module is configured to register, according to preset registration information, the depth video streams from the perspectives of the at least two cameras. The reconstruction module is configured to perform, according to the registered depth video streams from the perspectives of the at least two cameras, three-dimensional reconstruction to obtain a 3D video.

Embodiments of the present disclosure provide another apparatus for processing a three-dimensional video. The apparatus includes an acquisition module and a sending module. The acquisition module is configured to acquire depth video streams from perspectives of at least two cameras of the same scene, where a depth video stream of the depth video streams includes a color RGB stream and a depth information stream. The sending module is configured to: for each depth video stream of a respective camera perspective from the perspectives of the at least two cameras, send the RGB stream of each depth video stream to a cloud server through a respective one of RGB channels; evenly distributing the depth information stream to the RGB channels, and sending the depth information stream to the cloud server through the RGB channels.

The present disclosure also provides an electronic device. The device includes one or more processing apparatuses and a storage apparatus. The storage medium is configured to store one or more programs. The one or more programs, when executed by the one or more processing apparatuses, cause the one or more processing apparatuses to perform the methods for processing a three-dimensional video described above.

The present disclosure also provides a computer-readable storage medium storing a computer program that when executed by a processor, performs the methods for processing a three-dimensional video described above.

### BRIEF DESCRIPTION OF DRAWINGS

FIG. 1 is a flowchart of a method for processing a three-dimensional video according to embodiments of the present disclosure.
FIG. 2 is a flowchart of another method for processing a three-dimensional video according to embodiments of the present disclosure.
FIG. 3 is a diagram illustrating the structure of an apparatus for processing a three-dimensional video according to embodiments of the present disclosure.
FIG. 4 is a diagram illustrating the structure of another apparatus for processing a three-dimensional video according to embodiments of the present disclosure.
FIG. 5 is a diagram illustrating the structure of an electronic device according to embodiments of the present disclosure.

### DETAILED DESCRIPTION

Embodiments of the present disclosure are described hereinafter with reference to the drawings. The drawings illustrate some embodiments of the present disclosure, but the present disclosure may be implemented in various manners and it should not be construed as limited to the embodiments set forth herein. These embodiments are provided for an understanding of the present disclosure. The drawings and embodiments of the present disclosure are merely illustrative.

Steps described in method embodiments of the present disclosure may be performed in sequence and/or in parallel. Additionally, the method embodiments may include additional steps and/or omit some of the illustrated steps. The scope of the present disclosure is not limited in this respect.

The term "include" and variations thereof used herein refer to "including, but not limited to". The term "based on" refers to "at least partially based on". The term "an embodiment" refers to "at least one embodiment". The term "another embodiment" refers to "at least one another embodiment". The term "some embodiments" refers to "at least some embodiments". Definitions of other terms are given in the description hereinafter.

Concepts such as "first" and "second" in the present disclosure are used to distinguish between apparatuses, between modules, or between units and are not intended to limit the order or mutual dependence of the functions performed by these apparatuses, modules, or units.

"One" and "multiple" mentioned in the present disclosure are not limiting but illustrative and should be construed by those skilled in the art as "one or more" unless otherwise specified in the context.

The names of messages or information exchanged between multiple apparatuses in the embodiments of the present disclosure are used for illustrative purposes only and are not used to limit the scope of these messages or information.

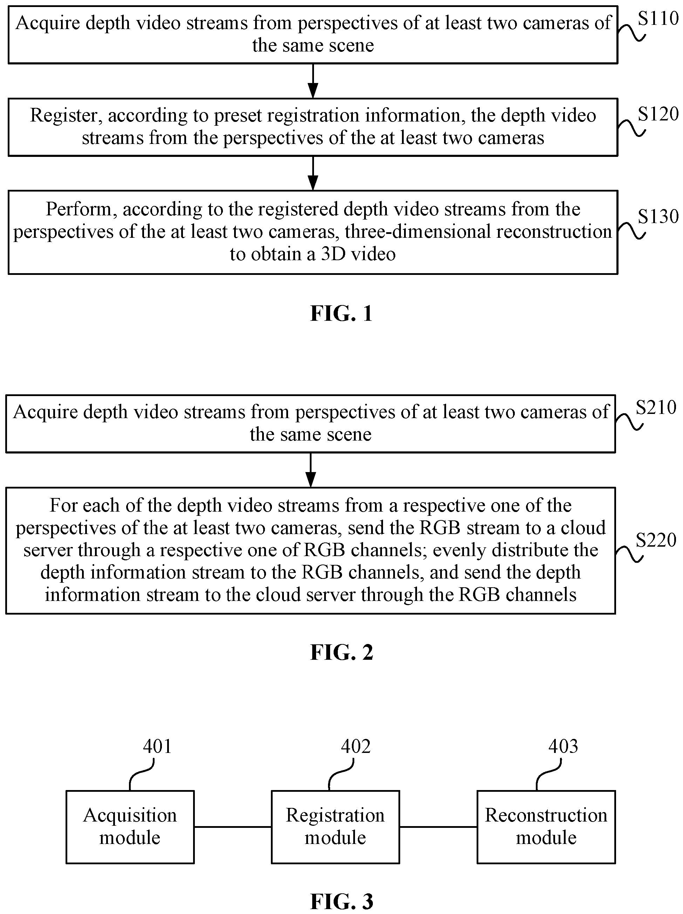

FIG. 1 is a flowchart of a method for processing a three-dimensional video according to embodiment one of the present disclosure. This embodiment is applicable to processing a three-dimensional video. The method may be implemented by an apparatus for processing a three-dimensional video. The apparatus may be composed of hardware and/or software and may be generally integrated into a device having a function of processing a 3D video. The device may be an electronic device such as a server, a mobile terminal, or a server cluster. As shown in FIG. 1, the method includes the steps S110-S130 described below.

S110: Depth video streams from perspectives of at least two cameras of the same scene are acquired.

The depth video stream includes an RGB stream and a depth information stream. The depth video streams from perspectives of at least two cameras may be photographed by depth cameras placed at different angles in the same scene. After the depth video streams photographed by at least two depth cameras are acquired, the depth video streams are encoded and sent to a cloud server.

In this embodiment, an encoded RGB stream is sent to the cloud server through a respective one of RGB channels. For the depth information stream, it is necessary to evenly distribute the depth information stream to the RGB channels first, then perform encoding, and finally send an encoded depth information stream to the cloud server. The depth information stream is 16 bits. Data transmitted through three RGB channels is 8 bits. To reduce the loss of precision caused by coding quantization, the depth information stream of 16 bits needs to be evenly distributed to high bits of the three RGB channels. Encoding of a depth video stream may employ an existing encoder supporting a YUV444 pixel format, for example, High Efficiency Video Coding (HEVC).

S120: According to preset registration information, the depth video streams from the perspectives of the at least two cameras are registered.

At least two cameras include a master camera and multiple slave cameras. It can be understood that registering the depth video streams from the perspectives of the at least two cameras refer to aligning depth video streams from the perspectives of the multiple slave cameras with depth video streams from a perspective of the master camera. It can be understood that the preset registration information denotes multiple pose transformation matrices between the multiple slave cameras and the master camera, where a pose transformation matrix exists between a slave camera and the master camera.

In this embodiment, acquiring the multiple pose transformation matrices between the multiple slave cameras and the master camera includes controlling the multiple slave cameras and the master camera to photograph a calibration object to obtain multiple pictures containing the calibration object; performing feature detection on the pictures containing the calibration object to acquire pose information of the calibration object in each picture; and determining, according to the pose information of the calibration object in the each picture, multiple pose transformation matrices between the multiple slave cameras and the master camera, where a pose transformation matrix exists between a respective slave camera and the master camera; or acquiring the multiple pose transformation matrices between the multiple slave cameras and the master camera includes acquiring, by adopting a set algorithm, multiple pose transformation matrices between the multiple slave cameras and the master camera, where a pose transformation matrix exists between a respective slave camera and the master camera.

Pose information includes a spatial position and a spatial direction. The calibration object may be a calibration plate having a set pattern or a human body.

If the calibration object is a calibration plate having a set pattern, acquiring multiple pose transformation matrices between the multiple slave cameras and the master camera may include placing the calibration plate having a set pattern in a scene to be photographed, controlling cameras placed at different angles to photograph the calibration plate, detecting photographed pictures by using a feature detection algorithm, acquiring initial pose information of the calibration plate in each photographed picture, inverting the acquired pose information, acquiring target pose information of the calibration plate in each camera coordinate system, and calculating multiple pose transformation matrices between the multiple slave cameras and the master camera.

If the calibration object is a human body, acquiring multiple pose transformation matrices between the multiple slave cameras and the master camera may include: after a person stands in the scene and remains still, acquiring depth picture information from respective angles of multiple cameras and estimating human bone information by using a deep learning algorithm. The depth picture information may include pose information of a main organ and joints (for example, head, eye, hand, crotch, and knee) of the human body. Multiple pose transformation matrices between the multiple slave cameras and the master camera may be obtained by performing, based on the least square method, registration on skeleton information of the same person which is obtained by multiple cameras.

In this embodiment, the set algorithm may be an iterative closest points (ICP) algorithm. In some embodiments, in a certain scenario, it is difficult to obtain a better result by using the ICP algorithm, and in this case, manual registration is performed instead of using the set algorithm, and the manual registration is implemented by using a graphical user interface (GUI) program in combination with manual operation.

Registering, according to the preset registration information, the depth video streams from the perspectives of the at least two cameras may include extracting point cloud streams from the perspectives of the at least two cameras corresponding to the depth video streams from the perspectives of the at least two cameras in a one-to-one correspondence; and performing, according to the multiple pose transformation matrices, pose transformation on point cloud streams from the perspectives of the multiple slave cameras so that pose of transformed point cloud streams from the perspectives of the multiple slave cameras is aligned with pose of point cloud streams from a perspective of the master camera.

The depth video streams include multiple depth video frames. Each depth video frame includes RGB information of multiple pixels and depth information of multiple pixels. It can be understood that extracting a point cloud stream corresponding to a depth video stream includes extracting the RGB information of multiple pixels and the depth information of multiple pixels included in each depth video frame to obtain the point cloud stream. After point cloud streams are acquired, pose transformation is performed on point cloud streams from the perspectives of the multiple slave cameras according to the multiple pose transformation matrices so that pose of transformed point cloud streams from the perspectives of the multiple slave cameras is aligned with pose of point cloud streams from a perspective of the master camera.

S130: According to the registered depth video streams from the perspectives of the at least two cameras, three-dimensional reconstruction is performed to obtain a 3D video.

Performing, according to the registered depth video streams from the perspectives of the at least two cameras, the three-dimensional reconstruction to obtain the 3D video includes adopting a set three-dimensional reconstruction algorithm to perform fusion and surface estimation on the transformed point cloud streams from the perspectives of the multiple slave cameras and the point cloud streams from the perspective of the master camera to obtain a 3D video.

The set three-dimensional reconstruction algorithm may be a truncated signed distance function (TSDF) algorithm. It can be understood that the principle of the TSDF algorithm includes mapping point cloud data into a predefined three-dimensional space and representing an area near the surface of the real scene by using a truncated signed distance function to create a surface model, that is, 3D mesh plus a surface map forms a complete 3D model.

In some embodiments, after obtaining the 3D video, the method also includes acquiring perspective information, and determining, according to the perspective information, a target image; and sending the target image to a playback device for playback.

It can be understood that the perspective information refers to a view angle of a user watching the video. The perspective information may be information send by a user via a playback device or a control device. The playback device may include a television, a desktop computer, or a mobile terminal. The control device may include a remote controller. Determining, according to the perspective information, the target image includes configuring, according to the perspective information, a virtual camera; and determining an image photographed by the virtual camera as a target image.

The photographing angle of the virtual camera is the view angle sent through a client device.

In this embodiment, determining the image photographed by the virtual camera as the target image may include determining an intersection point of light emitted by the virtual camera and the nearest object as a pixel point in an image photographed by the virtual camera; determining two-dimensional coordinates of the intersection point in a map formed by the surface of the nearest object; and determining, according to the two-dimensional coordinates, a pixel value of the intersection point by adopting a set interpolation method.

It can be understood that the map formed by the surface of an object denotes a two-dimensional map of the surface of the object which is being expanded. The set interpolation method may be a bilinear interpolation method. According to the two-dimensional coordinates of the intersection point in the map formed by the surface of the nearest object, pixel values of pixel points around the intersection point are calculated by using a set interpolation method to acquire the pixel value of the intersection point.

In the technical solution of this embodiment of the present disclosure, depth video streams from perspectives of at least two cameras of the same scene are acquired; according to the preset registration information, the depth video streams from the perspectives of the at least two cameras are registered; and according to the registered depth video streams from the perspectives of the at least two cameras, three-dimensional reconstruction is performed to obtain a 3D video. The method for processing a three-dimensional video which is provided by this embodiment of the present disclosure reconstructs a 3D video from registered depth video streams from perspectives of at least two cameras. In this manner, a 3D video is processed and the user experience of watching the 3D video is improved.

FIG. 2 is a flowchart of another method for processing a three-dimensional video according to embodiments of the present disclosure. As shown in FIG. 2, the method includes the steps S210-S220 described below.

S210: Depth video streams from perspectives of at least two cameras of the same scene are acquired.

The depth video stream includes an RGB stream and a depth information stream. The depth video streams from perspectives of at least two cameras may be photographed by depth cameras placed at different angles in the same scene.

S220: For each of the depth video streams from a respective one of the perspectives of the at least two cameras, the RGB stream is sent to a cloud server a respective one of RGB channels; the depth information stream is evenly distributed to the RGB channels, and the depth information stream is sent to the cloud server through the RGB channels.

After the depth video streams photographed by at least two depth cameras are acquired, the depth video streams are encoded and then sent to a cloud server. In this embodiment, an encoded RGB stream is sent to the cloud server through a respective one of RGB channels. For the depth information stream, it is necessary to evenly distribute the depth information stream to the RGB channel first, then perform encoding, and finally send an encoded depth information stream to the cloud server. The depth information stream is 16 bits. Data transmitted by three RGB channels are denoted by 8 bits. To reduce the loss of precision caused by coding quantization, the depth information stream of 16 bits needs to be evenly distributed to high bits of the RGB channels. In an example, the first bit of the depth information is assigned to the first high bit of a R channel, the second bit of the depth information is assigned to the first high bit of a G channel, the third bit of the depth information is assigned to the first high bit of a B channel, the fourth bit of the depth information is assigned to the second high bit of the R channel, and so on, until the depth information of 16 bits is assigned to the RGB channels. As a final result, the first 6 high bits of the R channel are filled with depth information, the first 5 high bits of the G channel are filled with depth information, the first 5 high bits of the B channel are filled with depth information, and the remaining bits of the three RGB channels are filled with 0. Encoding of a depth video stream may employ an encoder supporting a YUV444 pixel format, for example, HEVC coding.

In the technical solution of this embodiment of the present disclosure, depth video streams from perspectives of at least two cameras of the same scene are acquired; For each depth video stream from a respective one of perspectives of the at least two cameras, the RGB stream is sent to a cloud server through a respective one of RGB channels; the depth information stream is evenly distributed to the RGB channels, and the depth information stream is sent to the cloud server through the RGB channels. Evenly distributing the depth information stream to the RGB channel achieves the transmission of the depth video streams and improves the accuracy of coding the depth information.

FIG. 3 is a diagram illustrating the structure of an apparatus for processing a three-dimensional video according to embodiments of the present disclosure. The apparatus may be implemented by software and/or hardware and may be configured in an electronic device. For example, the apparatus may be configured in a device having a processing function of a three-dimensional video and can process a three-dimensional video by executing a method for processing a three-dimensional video. As shown in FIG. 3, the apparatus for processing a three-dimensional video which is provided by this embodiment of the present disclosure may include an acquisition module 401, a registration module 402, and a reconstruction module 403.

The acquisition module 401 is configured to acquire depth video streams from perspectives of at least two cameras of the same scene. The registration module 402 is configured to register, according to preset registration information, the depth video streams from the perspectives of the at least two cameras. The reconstruction module 403 is configured to perform, according to the registered depth video streams from the perspectives of the at least two cameras, three-dimensional reconstruction to obtain a 3D video.

The apparatus for processing a three-dimensional video which is provided by this embodiment of the present disclosure performs the steps described below. Depth video streams from perspectives of at least two cameras of the same scene are acquired. According to the preset registration information, the depth video streams from the perspectives of the at least two cameras are registered. According to the registered depth video streams from the perspectives of the at least two cameras, three-dimensional reconstruction is performed to obtain a 3D video. The method for processing a three-dimensional video which is provided by this embodiment of the present disclosure reconstructs a 3D video from registered depth video streams from perspectives of at least two cameras. In this manner, a 3D video is processed and the user experience of watching the 3D video is improved.

In an embodiment, at least two cameras include a master camera and multiple slave cameras, and the preset registration information is multiple pose transformation matrices between the multiple slave cameras and the master camera. The registration module 402 is configured to extract point cloud streams from the perspectives of the at least two cameras corresponding to the depth video streams from the perspectives of the at least two cameras in a one-to-one correspondence and perform, according to the multiple pose transformation matrices, pose transformation on point cloud streams from the perspectives of the multiple slave cameras so that pose of transformed point cloud streams from the perspectives of the multiple slave cameras is aligned with pose of point cloud streams from a perspective of the master camera.

In an embodiment, acquiring the multiple pose transformation matrices between the multiple slave cameras and the master camera includes controlling the multiple slave cameras and the master camera to photograph a calibration object to obtain multiple pictures containing the calibration object; performing feature detection on the pictures containing the calibration object to acquire pose information of the calibration object in each picture; and determining, according to the pose information of the calibration object in the each picture, multiple pose transformation matrices between the multiple slave cameras and the master camera; or acquiring the multiple pose transformation matrices between the multiple slave cameras and the master camera includes acquiring, by adopting a set algorithm, multiple pose transformation matrices between the multiple slave cameras and the master camera.

In an embodiment, the reconstruction module 403 is configured to adopt a set three-dimensional reconstruction algorithm to perform fusion and surface estimation on the transformed point cloud streams from the perspectives of the multiple slave cameras and the point cloud streams from the perspective of the master camera to obtain a 3D video.

In an embodiment, the apparatus also includes a determining module and a playing module. The determining module is configured to acquire perspective information and determine, according to the perspective information, a target image. The playing module is configured to send the target image to a playback device for playback.

In an embodiment, the determining module includes a configuration unit and a determining unit. The configuration unit is configured to configure, according to the perspective information, a virtual camera. The determining unit is configured to determine an image photographed by the virtual camera as a target image.

In an embodiment, the determining unit is configured to determine an intersection point of light emitted by the virtual camera and the nearest object as a pixel point in an image photographed by the virtual camera; determine two-dimensional coordinates of the intersection point in a map formed by the surface of the nearest object; and determine, according to the two-dimensional coordinates, the pixel value of the intersection point by adopting a set interpolation method.

The apparatus for processing a three-dimensional video according to this embodiment of the present disclosure can execute the method for processing a three-dimensional video according to any embodiment of the present disclosure and has functional modules and effects corresponding to the method for processing a three-dimensional video. For technical details not described in detail in this embodiment, reference may be made to the method for processing a three-dimensional video according to any embodiment of the present disclosure.

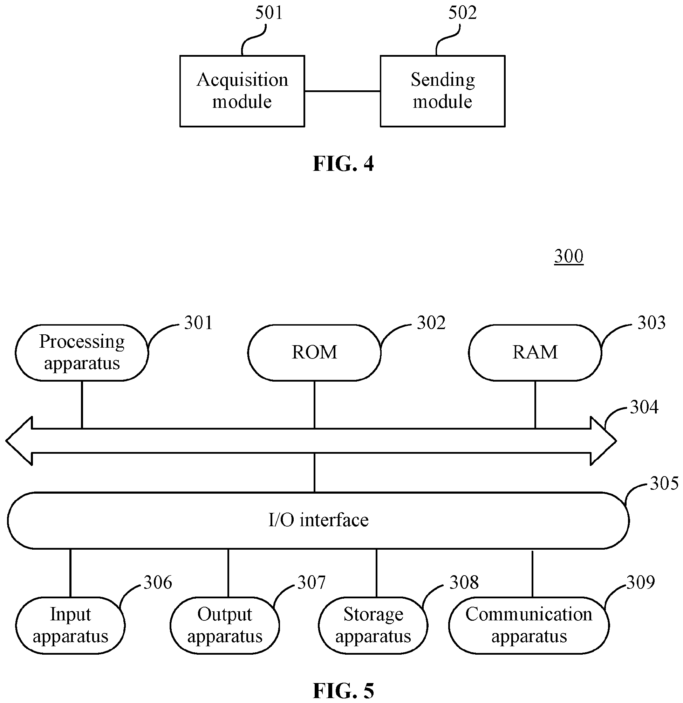

FIG. 4 is a diagram illustrating the structure of another apparatus for processing a three-dimensional video according to embodiments of the present disclosure. The apparatus may be implemented by software and/or hardware and may be configured in an electronic device. For example, the apparatus may be configured in a device having a processing function of a three-dimensional video and can process a three-dimensional video by executing a method for processing a three-dimensional video. As shown in FIG. 4, the apparatus for processing a three-dimensional video which is provided by this embodiment of the present disclosure may include an acquisition module 501 and a sending module 502.

The acquisition module 501 is configured to acquire depth video streams from perspectives of at least two cameras of the same scene. A depth video stream includes a RGB stream and a depth information stream. The sending module 502 is configured to: for each of the depth video streams from a respective one of the perspectives of the at least two cameras, send the RGB stream to a cloud server through a respective one of RGB channels; evenly distribute the depth information stream to the RGB channels, and send the depth information stream to the cloud server through the RGB channels.

The apparatus for processing a three-dimensional video which is provided by this embodiment of the present disclosure performs the steps described below. Depth video streams from perspectives of at least two cameras of the same scene are acquired. For each depth video stream from a respective one of the perspectives of the at least two cameras, the RGB stream is sent to a cloud server through a respective one of RGB channels. The depth information stream is evenly distributed to the RGB channels. The depth information stream is sent to the cloud server through the RGB channels. Evenly distributing the depth information stream to the RGB channel achieves the transmission of the depth video streams and improves the accuracy of coding the depth information.

In an embodiment, the sending module 502 is configured to evenly distribute the depth information stream to the RGB channel by evenly distributing bit data corresponding to the depth information stream to high bits of the RGB channels.

The apparatus for processing a three-dimensional video according to this embodiment of the present disclosure can execute the method for processing a three-dimensional video according to any embodiment of the present disclosure and has functional modules and effects corresponding to the method for processing a three-dimensional video. For technical details not described in detail in this embodiment, reference may be made to the method for processing a three-dimensional video according to any embodiment of the present disclosure.

Referring to FIG. 5, FIG. 5 is a diagram illustrating the structure of an electronic device 300 applicable to implementing the embodiments of the present disclosure. The electronic device in the embodiments of the present disclosure may include but is not limited to, a mobile terminal such as a mobile phone, a laptop, a digital broadcast receiver, a personal digital assistant (PDA), a PAD, a portable media player (PMP), and a vehicle-mounted terminal (for example, a vehicle-mounted navigation terminal), a fixed terminal such as a digital TV and a desktop computer, or various forms of servers such as a stand-alone server or a server cluster. The electronic device shown in FIG. 5 is merely an example and should not impose any limitation to the function and usage scope of embodiments of the present disclosure.

As shown in FIG. 5, the electronic device 300 may include a processing apparatus 301 (such as a central processing unit or a graphics processor). The processing apparatus 301 may perform various appropriate operations and processing according to a program stored in a read-only memory (ROM) 302 or a program loaded into a random access memory (RAM) 303 from a storage apparatus 308. The RAM 303 also stores various programs and data required for the operation of the electronic device 300. The processing apparatus 301, the ROM 302, and the RAM 303 are connected to each other through a bus 304. An input/output (I/O) interface 305 is also connected to the bus 304.

Generally, the following apparatus may be connected to the I/O interface 305: an input apparatus 306 such as a touch screen, a touch pad, a keyboard, a mouse, a camera, a microphone, an accelerometer, and a gyroscope; an output apparatus 307 such as a liquid crystal display (LCD), a speaker, and a vibrator; a storage apparatus 308 such as a magnetic tape and a hard disk; and a communication apparatus 309. The communication apparatus 309 may allow the electronic device 300 to perform wireless or wired communication with other devices to exchange data. FIG. 5 shows the electronic device 300 having various apparatuses, but it should be understood that it is not necessary to implement or be equipped with all the shown apparatuses. Alternatively, the electronic device 300 may implement or be equipped with more or fewer apparatuses.

According to this embodiment of the present disclosure, the process described above with reference to the flowchart may be implemented as a computer software program. For example, this embodiment of the present disclosure includes a computer program product. The computer program product includes a computer program carried in a computer-readable medium. The computer program includes program codes for performing the recommended method of words. In such an embodiment, the computer program may be downloaded and installed from the network through the communication apparatus 309, may be installed from the storage apparatus 308, or may be installed from the ROM 302. When the computer program is executed by the processing apparatus 301, the preceding functions defined in the methods of the embodiments of the present disclosure are performed.

The preceding computer-readable storage medium of the present disclosure may be a computer-readable signal medium, a computer-readable storage medium, or any combination of the computer-readable signal medium and the computer-readable storage medium. The computer-readable storage medium may be, but is not limited to, an electrical, magnetic, optical, electromagnetic, infrared, or semiconductor system, apparatus, or device, or any combination thereof. Examples of the computer-readable storage medium may include, but are not limited to, an electrical connection with one or more wires, a portable computer disk, a hard disk, a RAM, a ROM, an erasable programmable read-only memory (EPROM or flash memory), an optical fiber, a portable compact disc read-only memory (CD-ROM), an optical storage device, a magnetic storage device, or any appropriate combination thereof. In the present disclosure, the computer-readable storage medium may be any tangible medium including or storing a program. The program may be used by or used in conjunction with an instruction execution system, apparatus, or device. In the present disclosure, the computer-readable signal medium may include a data signal propagated on a baseband or as a part of a carrier wave. Computer-readable program codes are carried in the data signal. Such propagated data signals may take a variety of forms, including, but not limited to, electromagnetic signals, optical signals, or any suitable combination thereof. The computer-readable signal medium may also be any computer-readable storage medium other than a computer-readable storage medium. The computer-readable signal medium may send, propagate, or transmit a program used by or in conjunction with an instruction execution system, apparatus, or device. The program codes contained on the computer-readable storage medium may be transmitted on any suitable medium, including, but not limited to, a wire, an optical cable, radio frequency (RF), or any suitable combination thereof.

In some embodiments, the client and the server can communicate by using any currently known or future-developed network protocol such as HyperText Transfer Protocol (HTTP ) and can be interconnected by any form or medium of digital data communication (for example, a communication network). Examples of the communication network include a local area network (LAN), a wide area network (WAN), an interconnected network (for example, the Internet), an end-to-end network (for example, an ad hoc end-to-end network), and any currently known or future-developed network.

The preceding computer-readable storage medium may be included in the preceding electronic device, or may exist alone without being assembled into the electronic device.

The preceding computer-readable storage medium carries one or more programs. When executing the one or more programs, the electronic device performs the steps described below. Depth video streams from perspectives of at least two cameras of the same scene are acquired. According to the preset registration information, the depth video streams from the perspectives of the at least two cameras are registered. According to the registered depth video streams from the perspectives of the at least two cameras, three-dimensional reconstruction is performed to obtain a 3D video. Alternatively, the electronic device performs the steps described below. Depth video streams from perspectives of at least two cameras of the same scene are acquired. A depth video stream includes a color RGB stream and a depth information stream. For each depth video stream from a respective one of perspectives of the at least two cameras, the RGB stream is sent to a cloud server through a respective one of RGB channels. The depth information stream is evenly distributed to the RGB channels. The depth information stream is sent to the cloud server through the RGB channels.

Computer program codes for performing the operations in the present disclosure may be written in one or more programming languages or a combination thereof. The preceding one or more programming languages include but are not limited to object-oriented programming languages such as Java, Smalltalk, and C++, as well as conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In the case relating to a remote computer, the remote computer may be connected to a user computer via any kind of network including a local area network (LAN) or a wide area network (WAN), or may be connected to an external computer (for example, via the Internet through an Internet service provider).

The flowcharts and block diagrams in the drawings show possible architectures, functions, and operations of the system, method, and computer program product according to the multiple embodiments of the present disclosure. In this regard, each block in the flowcharts or block diagrams may represent a module, a program segment, or part of codes that include one or more executable instructions for implementing specified logical functions. It is also to be noted that in some alternative implementations, the functions noted in the blocks may take an order different from the order noted in the drawings. For example, two sequential blocks may, in fact, be executed substantially in parallel, or sometimes executed in the reverse order, which depends on the involved functions. It is also to be noted that each block of the block diagrams and/or flowcharts and combinations of blocks in the block diagrams and/or flowcharts may be implemented by not only a specific-purpose hardware-based system that performs a specified function or action, but also a combination of specific-purpose hardware and computer instructions.

The described units involved in the embodiments of the present disclosure may be implemented by software or hardware. The name of a unit is not intended to limit the unit in one case.

The functions described herein above may be performed at least in part by one or more hardware logic components. For example, without limitation, exemplary types of hardware logic components that may be used include Field Programmable Gate Array (FPGA), Application Specific Integrated Circuit (ASIC), Application Specific Standard Product (ASSP), System on Chips (SOC), and Complex Programmable Logical device (CPLD).

In the context of the present disclosure, a machine-readable medium may be a tangible medium that may contain or store a computer program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. Examples of the machine-readable storage medium may include an electrical connection based on one or more wires, a portable computer disk, a hard disk, a RAM, a ROM, an EPROM or flash memory, an optical fiber, a CD-ROM, an optical storage device, a magnetic storage device, or any appropriate combination thereof.

According to one or more embodiments of the present disclosure, a method for processing a three-dimensional video is provided. The method includes acquiring depth video streams from perspectives of at least two cameras of the same scene; registering, according to preset registration information, the depth video streams from the perspectives of the at least two cameras; and performing, according to the registered depth video streams from the perspectives of the at least two cameras, three-dimensional reconstruction to obtain a 3D video.

At least two cameras include a master camera and multiple slave cameras. The preset registration information is multiple pose transformation matrices between the multiple slave cameras and the master camera. Registering, according to the preset registration information, the depth video streams from the perspectives of the at least two cameras includes extracting point cloud streams from the perspectives of the at least two cameras corresponding to the depth video streams from the perspectives of the at least two cameras in a one-to-one correspondence; and performing, according to the multiple pose transformation matrices, pose transformation on point cloud streams from the perspectives of the multiple slave cameras so that pose of transformed point cloud streams from the perspectives of the multiple slave cameras is aligned with pose of point cloud streams from a perspective of the master camera.

Acquiring the multiple pose transformation matrices between the multiple slave cameras and the master camera includes controlling the multiple slave cameras and the master camera to photograph a calibration object to obtain multiple pictures containing the calibration object; performing feature detection on the pictures containing the calibration object to acquire pose information of the calibration object in each picture; and determining, according to the pose information of the calibration object in the each picture, multiple pose transformation matrices between the multiple slave cameras and the master camera; or, acquiring the multiple pose transformation matrices between the multiple slave cameras and the master camera includes acquiring, by adopting a set algorithm, multiple pose transformation matrices between the multiple slave cameras and the master camera.

Performing, according to the registered depth video streams from the perspectives of the at least two cameras, the three-dimensional reconstruction to obtain the 3D video includes adopting a set three-dimensional reconstruction algorithm to perform fusion and surface estimation on the transformed point cloud streams from the perspectives of the multiple slave cameras and the point cloud streams from the perspective of the master camera to obtain a 3D video.

After the 3D video is acquired, the method also includes following steps of acquiring perspective information, and determining, according to the perspective information, a target image; and sending the target image to a playback device for playback.

Determining, according to the perspective information, the target image includes configuring, according to the perspective information, a virtual camera; and determining an image photographed by the virtual camera as a target image.

Determining the image photographed by the virtual camera as the target image includes determining an intersection point of light emitted by the virtual camera and the nearest object as a pixel point in an image photographed by the virtual camera; determining two-dimensional coordinates of the intersection point in a map formed by the surface of the nearest object; and determining, according to the two-dimensional coordinates, the pixel value of the intersection point by adopting a set interpolation method.

Embodiments of the present disclosure also provide a method for processing a three-dimensional video. The method includes acquiring depth video streams from perspectives of at least two cameras of the same scene, where a depth video stream includes a color RGB stream and a depth information stream; and for each depth video stream from a respective one of perspectives of the at least two cameras, sending the RGB stream to a cloud server through a respective one of RGB channels; evenly distributing the depth information stream to the RGB channels, and sending the depth information stream to the cloud server through the RGB channels.

Evenly distributing the depth information stream to the RGB channel includes evenly distributing bit data corresponding to the depth information stream to high bits of the RGB channels.

Embodiments of the present disclosure also disclose an apparatus for processing a three-dimensional video. The apparatus includes an acquisition module, a registration module, and a reconstruction module.

The acquisition module is configured to acquire depth video streams from perspectives of at least two cameras of the same scene.

The registration module is configured to register, according to preset registration information, the depth video streams from the perspectives of the at least two cameras.

The reconstruction module is configured to perform, according to the registered depth video streams from the perspectives of the at least two cameras, three-dimensional reconstruction to obtain a 3D video.

Embodiments of the present disclosure also provide an apparatus for processing a three-dimensional video. The apparatus includes an acquisition module and a sending module.

The acquisition module is configured to acquire depth video streams from perspectives of at least two cameras of the same scene. A depth video stream includes a color RGB stream and a depth information stream.

The sending module is configured to: for each depth video stream from a respective one of perspectives of the at least two cameras, send the RGB stream to a cloud server through a respective one of RGB channels; evenly distribute the depth information stream to the RGB channels, and send the depth information stream to the cloud server through the RGB channels.

The preceding apparatuses can execute the methods provided by any embodiment of the present disclosure and have corresponding functional modules and beneficial effects for executing the preceding methods. For technical details not described in detail in this embodiment, reference may be made to the methods provided in any preceding embodiment of the present disclosure.

## Claims

1. A method for processing a three-dimensional video, comprising:
acquiring depth video streams from perspectives of at least two cameras of a same scene;
registering, according to preset registration information, the depth video streams from the perspectives of the at least two cameras; and
performing, according to the registered depth video streams from the perspectives of the at least two cameras, three-dimensional reconstruction to obtain a 3D video.

2. The method of claim 1, wherein the at least two cameras comprise a master camera and a plurality of slave cameras, the preset registration information is a plurality of pose transformation matrices between the plurality of slave cameras and the master camera, and registering, according to the preset registration information, the depth video streams from the perspectives of the at least two cameras, comprises:
extracting point cloud streams from the perspectives of the at least two cameras corresponding to the depth video streams from the perspectives of the at least two cameras in a one-to-one correspondence; and
performing, according to the plurality of pose transformation matrices, pose transformation on point cloud streams from perspectives of the plurality of slave cameras, to align pose of transformed point cloud streams from the perspectives of the plurality of slave cameras with pose of point cloud streams from a perspective of the master camera.

3. The method of claim 2, wherein acquiring the plurality of pose transformation matrices between the plurality of slave cameras and the master camera comprises:
controlling the plurality of slave cameras and the master camera to photograph a calibration object to acquire a plurality of pictures containing the calibration object;
performing feature detection on the plurality of pictures containing the calibration object to acquire pose information of the calibration object in each picture of the plurality of pictures containing the calibration object; and
determining, according to the pose information of the calibration object in the each picture, a plurality of pose transformation matrices between the plurality of slave cameras and the master camera where a pose transformation matrix of the plurality of pose transformation matrices exists between a respective slave camera of the plurality of slave cameras and the master camera;
or,
acquiring the plurality of pose transformation matrices between the plurality of slave cameras and the master camera comprises:
acquiring, by adopting a set algorithm, the plurality of pose transformation matrices between the plurality of slave cameras and the master camera.

4. The method of claim 2, wherein performing, according to the registered depth video streams from the perspectives of the at least two cameras, the three-dimensional reconstruction to obtain the 3D video, comprises:
adopting a set three-dimensional reconstruction algorithm to perform fusion and surface estimation on the transformed point cloud streams from the perspectives of the plurality of slave cameras and the point cloud streams from the perspective of the master camera to obtain the 3D video.

5. The method of claim 1, wherein after obtaining the 3D video, the method further comprises:
acquiring perspective information, and determining, according to the perspective information, a target image; and
sending the target image to a playback device for playback.

6. The method of claim 5, wherein determining, according to the perspective information, the target image, comprises:
configuring, according to the perspective information, a virtual camera; and
determining an image photographed by the virtual camera as a target image.

7. The method of claim 6, wherein determining the image photographed by the virtual camera as the target image, comprises:
determining an intersection point of light emitted by the virtual camera and a nearest object as a pixel point in an image photographed by the virtual camera;
determining two-dimensional coordinates of the intersection point in a map formed by a surface of the nearest object; and
determining, according to the two-dimensional coordinates, a pixel value of the intersection point by adopting a set interpolation method.

8. A method for processing a three-dimensional video, comprising:
acquiring depth video streams from perspectives of at least two cameras of a same scene, wherein each of the depth video streams comprises a Red-Green-Blue (RGB) stream and a depth information stream; and
for each of the depth video streams from a respective one of the perspectives of the at least two cameras, sending the RGB stream to a cloud server through a respective one of RGB channels; evenly distributing the depth information stream to the RGB channels, and sending the depth information stream to the cloud server through the RGB channels.

9. The method of claim 8, wherein evenly distributing the depth information stream to the RGB channel, comprises:
evenly distributing bit data corresponding to the depth information stream to high bits of the RGB channels.

10. An apparatus for processing a three-dimensional video, comprising:
an acquisition module, configured to acquire depth video streams from perspectives of at least two cameras of a same scene;
a registration module, configured to register, according to preset registration information, the depth video streams from the perspectives of the at least two cameras; and
a reconstruction module, configured to perform, according to the registered depth video streams from the perspectives of the at least two cameras, three-dimensional reconstruction to obtain a 3D video.

11. An apparatus for processing a three-dimensional video, comprising:
an acquisition module, configured to acquire depth video streams from perspectives of at least two cameras of a same scene, wherein each of the depth video streams comprises a Red-Green-Blue (RGB) stream and a depth information stream; and
a sending module, configured to: for each of the depth video streams from a respective one of the perspectives of the at least two cameras, send the RGB stream to a cloud server through a respective one of RGB channels; evenly distribute the depth information stream to the RGB channels, and send the depth information stream to the cloud server through the RGB channels.

12. An electronic device, comprising:
at least one processing apparatus; and
a storage apparatus configured to store at least one program;
wherein the at least one program, when executed by the at least one processing apparatus, causes the at least one processing apparatus to perform the method for processing a three-dimensional video of any one of claims 1 to 9.

13. A computer-readable storage medium storing a computer program that when executed by a processing apparatus, performs the method for processing a three-dimensional video of any one of claims 1 to 9.
